# EUROPÄISCHE PATENTSCHRIFT

(11) **EP 2 177 843 B1**
(45) Veröffentlichungstag und Bekanntmachung des Hinweises auf die Patenterteilung: **12.10.2016**
(21) Anmeldenummer: 09172529.1
(22) Anmeldetag: 08.10.2009
(51) Int. Cl.: F24F 13/15, B60H 1/34, C25D 5/56, C25D 5/02

(54) **Verschwenkbar gelagerte Lamelle in einer Lamellenanordnung in einem Gehäuse einer Luftdüse**
Pivotable lamella in a lamella assembly in the casing of an air jet
Lamelle stockée et pouvant être pivotée dans une installation de lamelles dans un boîtier d'une tuyère d'air

(30) Priorität: 17.10.2008 DE 202008008877 U
(43) Veröffentlichungstag der Anmeldung: 21.04.2010
(73) Patentinhaber: Dr. Schneider Kunststoffwerke GmbH, 96317 Kronach (DE)
(72) Erfinder: Wötting, Ulrich, 95032 Hof (DE)
(74) Vertreter: Pröll, Jürgen

(56) Entgegenhaltungen:
- EP-A- 1 832 452
- EP-A- 1 835 237
- EP-A- 2 009 362
- WO-A-2008/017423
- DE-A1- 2 507 530
- DE-A1- 19 516 540
- DE-A1-102007 015 625
- DE-U1- 20 118 014
- DE-U1-202007 017 701
- US-A1- 2008 067 075

## Beschreibung

Die Erfindung betrifft eine Lamelle, die für die verschwenkbare Lagerung in einer Lamellenanordnung in einem Gehäuse einer Luftdüse geeignet ist, mit den im Oberbegriff des Anspruchs 1 angegebenen Merkmalen.

Eine Lamelle der gattungsgemäßen Art ist aus der EP 2 009 362 A2 bekannt. Eine Lamelle der gattungsgemäßen Art ist ferner aus der EP 1 832 452 A2 bekannt. Diese Schrift gibt eine verschwenkbar gelagerte Lamelle in einer Lamellenanordnung in einem Gehäuse einer Luftdüse mit einer vorderen Luftaustrittsöffnung und einem rückseitigen Anschluss an einem Luftzuführschacht an. Aus den schmalen Seitenflächen der Lamelle stehen eine Schwenkachse bildende Lagerzapfen vor. Die Lamelle ist ein Verbundteil, das aus Kunststoff besteht, wobei die Lamelle einen Kern aufweist, an dem die Lagerzapfen aus gleichem Material angeformt sind.

Weiterhin ist aus der DE 195 16 540 A1 ein Rüstungsteil aus Kunststoff mit Metallbeschichtung für den Automobilbau bekannt, das aus einem Verbundwerkstoff besteht, und zwar aus einem ersten, nicht galvanisierbaren Kernwerkstoff sowie einer partiellen Umhüllungsschicht aus einem zweiten, galvanisierbaren Kunststoff. Durch die Anordnung wird eine Metallisierbarkeit der Oberfläche an ausgewählten Bereichen gewährleistet und gleichzeitig die Materialauswahl für einen Kernwerkstoff mit ausreichender mechanischer Festigkeit nicht eingeschränkt. Außerdem wird das Bauteil nur an den gewünschten Stellen galvanisiert. Ein Abdecken von nicht zu galvanisierenden Bereichen ist nicht erforderlich.

Aus der DE 20 2007 017 701 U1 ist eine Lamelle einer Lüftungsdüse gemäß dem Oberbegriff von Anspruch 1, insbesondere im Kraftfahrzeugbereich bekannt, welche als Mehrkomponentenspritzgussteil aus Kunststoff besteht. Eine erste Komponente bildet im Wesentlichen eine erste Seite der Lamelle und besteht aus einem ersten verstärkten Kunststoff, welcher nicht metallisierbar ist. Eine zweite Komponente bildet im Wesentlichen eine der ersten Seite gegenüberliegende zweite Seite der Lamelle und besteht aus einem zweiten Kunststoff, welcher an die erste Komponente in definierter Weise anspritzbar und metallisierbar ist. Die erste Komponente kann ein Polycarbonat-Kunststoff sein, die zweite ein Acrylnitril-Butadien-Styrol-Kunststoff (ABS). Die Schwenklagerzapfen sind entweder umspritzt oder aus Metall ausgeführt. Durch den einseitigen Verbund ist unter Umständen ein Bi-MetallEffekt gegeben, da die beiden Schichten unterschiedliche Dehnungskoeffizienten aufweisen, so dass eine Durchbie gung der Lamelle nicht auszuschließen ist. Auch können sich die beiden aneinanderliegenden Kunststoffschichten voneinander lösen, wenn sie nicht durch Diffusion miteinander unmittelbar verbunden sind oder die Diffusionstiefe so gering ist, dass durch den unterschiedlichen Dehnungsfaktor die Verbindung sich auflösen kann.

Aus der DE 20 2007 008 676 US ist eine gestreckte Flachbaugruppe für Fahrzeuge, insbesondere eine Lamelle, aus Kunststoff mit An- und Ausformungen zum Verbinden mit anderen Bauelementen oder zur Lagerung an oder zur Befestigung von Bauteilen bekannt, die aus mit kurzen Fasern versetztem Polyarylamid besteht. Die Fasern sind Kohlenstofffasern, Metallfaserabschnitte oder Fasern aus Kunststoff mit aufgerauter Oberfläche.

Aus der DE 10 2004 006 461 U1 ist eine Lamelle bekannt, die aus Kunststoff besteht. Mittig weist die Lamelle ein Schiebeelement auf, das aus zwei Hälften zusammengesetzt ist und rückseitig ein Kraftübertragungselement in Form einer Gabel aufweist, über das eine Antriebseinrichtung oder eine Steuerlamelle, die senkrecht zur Lamelle im Gehäuse angeordnet ist, betätigt werden kann. Der Verschiebeweg des Schiebeelements ist durch Anschläge begrenzt, die aus der Fläche oder an der vorderen Stirnseite der Lamelle vorstehen und gegen die inneren Anschlagsflächen des Schiebeelements greifen. Zwischen den beiden Ansätzen ist eine Vertiefung vorgesehen, in der ein Wälzelement zur Dämpfung der Verschiebebewegung angeordnet ist.

Aus der DE 203 07 030 U1, der DE 37 19 837 C1, DE 101 32 186 A1, DE 203 16 176 U1 und aus der DE 201 18 014 U1 sind Lamellen mit Schiebeelementen bekannt. In der zuletzt genannten Schrift ist das Schiebeelement lichtdurchflutet ausgeführt. In dem Schiebeelement befindet sich dabei eine Lichtquelle, die über auf der aus Kunststoff bestehenden Lamelle angebrachten Stromschienen mit Strom versorgt wird. Die Stromschienen sind entweder aufgedampft, aufgeklebt oder bestehen aus leitfähigem Kunststoff, der in Längsnuten eingebracht ist.

Wenn eine Lamelle in einer Luftdüse aus Kunststoff eine größere Länge bzw. bei vertikaler Anordnung eine größere Höhe aufweist und ein relativ kleines Schiebelement oder ein anderes Betätigungselement, z. B. ein Drehsteller. aufgebracht ist, treten bei deren Betätigung erhöhte mechanische Belastungen auf, die zum Durchbiegen der Lamelle führen können. Dies kann insbesondere bei mehrjährigem Gebrauch und bei hoher Temperatur der durchströmenden Luft dazu führen, dass die Durchbiegung sich nicht mehr zurückstellt und damit die Betätigung der Einstellelemente schwerer wird. Ferner können bei jalousieartiger Anordnung von Lamellen uneinheitliche Luftspalte zwischen den einzelnen Lamellen durch die Eigenverformung der Lamellen auftreten. Es hat sich ferner gezeigt, dass auch bei mechanisch relativ unbelasteten Lamellen solche Verbiegungen, insbesondere dann, wenn sie horizontal angeordnet sind und bei längerem Gebrauch ständig von erwärmter Luft durchströmt werden, eintreten können, insbesondere dann, wenn die Lamellen sehr dünn ausgeführt sind.

Um das Durchbiegen zu vermeiden, ist es aus der EP 1 835 237 B1 bekannt, ein metallisches Einlegeteil vorzusehen, das sich im Wesentlichen über die gesamte Länge der Lamelle erstreckt und in Kunststoff eingebettet ist und mit einem Längsstreifen rückseitig aus dem Kunststoff vorsteht oder von dem Kunststoff vollständig umgeben ist. Im Falle des vorstehenden Streifens kann dieser als Stromschiene genutzt werden.

Aus der DE 20 2008 008 822 ist ein dreh- oder verschiebbar gelagertes, hinterleuchtbares Bedienelement aus Kunststoff mit Mitteln zur mechanischen Kraftübertragung oder mit Mitteln für elektrische Steuerungen bekannt, das aus einem Kernelement aus transluzentem, nicht galvanisierbarem Kunststoff besteht. Dieser Kern ist von einem Mantelelement mindestens an der oder den sichtbaren Seiten umgeben. Das Mantelelement ist auf das Kernelement aufgespritzt und besteht aus galvanisierbarem Kunststoff, wobei Zonen für die Aufnahme von Durchleuchtungsteilen des Kernelements freigehalten sind. Auf das Mantelelement ist mindestens an der zugänglichen Oberfläche ein haptisches Element aus nicht galvanisierbarem Weichkunststoff derart aufgebracht, dass galvanisierbare Zonen am Mantelelement hervortreten und die durchleuchteten Teile sichtbar sind.

Ausgehend vom vorgenannten Stand der Technik liegt der Erfindung die Aufgabe zugrunde, für den Verbundwerkstoff der Lamelle eine Materialkombination zu wählen, die eine Geräuschdämmung des Luftstromes beim Durchströmen der Düse bewirkt und die es ermöglicht, aus optischen Gründen eine wenigstens partielle Metallisierung der Lamellenoberfläche mittels eines Galvanisierungsprozesses zu erreichen, ohne dass nicht zu galvanisierende Bereiche dabei aufwendig abgedeckt werden müssen. Außerdem soll die Materialauswahl des Kernwerkstoffes nicht durch die gewünschte Oberflächenbehandlung eingeschränkt werden, so dass ein Kernwerkstoff mit der gewünschten mechanischen Festigkeit ausgewählt werden kann.

Die Aufgaben löst die Erfindung durch Ausgestaltung der Lamelle gemäß der im Anspruch 1 angegebenen technischen Lehre. Vorteilhafte Weiterbildungen der Erfindung sind in den Unteransprüchen angegeben.

Die Lamelle besteht aus einem Kern aus einem nicht galvanisierbaren Kunststoff, an dem die Lagerzapfen, die an den Stirnseiten vorstehen, angeformt sind, so dass diese auch bei Einhängen der Lamelle in ein galvanisches Beschichtungsbad nicht metallisiert werden können. Auf dem Kern ist mindestens im sichtbaren Bereich, also in dem Bereich, der vor der Schwenkachse in der Regel liegt, eine Umhüllungsschicht aus einem galvanisierbaren Kunststoff beidseitig aufgebracht. Auf diesen Kunststoff kann dann insgesamt oder nach vorheriger partieller Bedruckung partiell eine Metallschicht im Galvanikbad aufgebracht werden, wodurch gewünschte optische Effekte erzielbar sind. Es kann aber auch die Galvanikschicht durchgehend z.B. als Stromschiene aufgebracht sein, so dass ein darauf aufsetzbarer Reiter von einer eingebetteten Lichtquelle hinterleuchtet werden kann. Ebenso können sich in einem solchen Schiebeelement Kontakte befinden, die geschlossen werden, wenn der Schieber von einem Finger berührt wird, so dass über die Stromschiene in gewünschter Weise ein Strom fließt und damit beispielsweise elektrisch eine Verschließklappe der Düse betätigt werden kann. Die Möglichkeit der Aufbringung einer Metallschicht ist mithin nicht nur aus optischen Gründen sondern auch dann gewünscht, wenn diese Schichten als Stromführungsschichten verwendet werden sollen.

Der Kern besteht aus einem nicht galvanisierbaren Kunststoff. Vorzugsweise ist dieser Kunststoff mit Kohlenstofffasern, Metallfaderiabschnitten oder Fasern aus Kunststoff oder mit Glasfasernabschnitten verstärkt, so wie dies z. B. in der DE 20 2007 008 676 U1 angegeben ist. Dadurch wird ein stabiler Aufbau erzielt. Die Umhüllungsschicht aus einem nicht galvanisierbaren Kunststoff kann dann extrem dünn aufgebracht werden. Diese Schicht wirkt zwar verstärkend, die eigentliche Durchbiegungsfestigkeit und Steifigkeit der Lamelle wird aber durch den Kern selbst bestimmt.

Um eine Geräuschdämmung bei der Durchströmung der Luft durch eine Düsenanordnung mit einer Vielzahl von Lamellen nach der Erfindung zu erreichen, ist in weiterer Ausgestaltung der Erfindung vorgesehen dass jene Teile der Umhüllungsschicht, die nicht galvanisiert werden sollen, mit einer Weichkunststoffschicht überzogen sind. Hierfür eignet sich beispielsweise ein thermoplastisches Elastomer auf der Baisis von SEBS/PP (Polystyrol-poly(ethylen/ butylen)-polystyrol / Polypropylen) mit einem Seitenkettenanteil von über 60%. Weitere geeignete Kunststoffe zur Bildung des Kerns und der Umhüllungsschicht sind aus der WO 2008/017423 für andere Zwecke bekannt. Die Weichkunststoffschicht kann auch als Umhüllungsschicht vorgesehen sein, so dass sie im Zweikomponenten-Spritzgießverfahren aufgetragen werden kann und die Umhüllungsschicht aus galvanisierbarem Kunststoff, die normalerweise eine Hartkunststoffschicht ist,ersetzt. Die Weichkunststoffschicht kann aber auch ergänzend zu einer die Oberfläche im Wesentlichen prägenden Umhüllungsschicht partiell auf den Kern mit aufgebracht werden, um die Geräuschdämmung bzw. die gewünschte zusätzliche Verwirbelung des Luftstromes zu erzielen. Die Weichkunststoffschicht kann auch wulstförmig an der vorderen Kante oder Kanäle bildend an der Oberfläche angespritzt sein.

Der Kern kann zur weiteren Erhöhung der Durchbiegungsstabilität mit einem metallischen Einlegeteil versehen sein. Dieser Einlegeteil kann beispielsweise auch in den Kern eingespritzt sein. Der Kern selbst kann eine glatte, gerippte oder geprägte Oberfläche aufweisen oder in einer Rippen- oder Prägestruktur ausgeführt sein. Er kann aber auch Löcher aufweisen, damit die Umhüllungsschicht, die bei der Herstellung nach dem Zweikomponenten-Spritzgießverfahren in einer zweiten Kavität des Werkzeuges aufgebracht wird, fest an dem Kern haftet bzw. sich mit diesem form- und stoffschlüssig verbindet und eine Einheit bildet. Die Rippen und Prägungen oder die Löcher bilden dabei die Voraussetzung, dass eine hohe Oberflächenbindung besteht.

Als Kernmaterial hat sich als besonders geeignet Polycarbonat erwiesen. Dieser Kunststoff lässt sich mit Glasfaserabschnitten oder mit Metallfasern oder mit Kohlenstofffaserabschnitten mischen, so dass durch diese Faserverstärkung eine erhöhte Durchbiegefestigkeit erzielt werden kann. Auf den Kern kann dann als Umhüllungsschicht eine ABS-Kunststoffschicht oder eine ABS-Polycarbonat-Schicht aufgebracht werden. Auch kann ein Polyarylamid (PAA) zur Herstellung des Kerns verwendet werden. Die aufzubringende Umhüllungsschicht besteht beispielsweise aus einer Hartkunststoffkomponente mit einer glatten Oberfläche, auf die dann in gewünschter Weise die Metallschichten bzw. eine durchgehende Metallschicht durch Galvanisieren aufgebracht werden können.

In einer besonderen Ausgestaltungsform ist vorgesehen, dass der Kunststoffkern aus einem transparenten, also lichtdurchlässigem oder lichtsammelnden Kunststoff besteht, so dass über den Lagerzapfen Licht eingeleitet werden kann. In diesem Fall sind über die längere Stirnkante keine Galvanisierungen vorgesehen oder nur partiell vorgesehen, so dass das Licht austreten kann. Die Umhüllungsschicht befindet sich dann oben- oder untenseitig bzw. bei senkrechter Anordnung der Lamelle links und rechts. Hier können also Licht- und Metalleffekte miteinander auf einfache Weise kombiniert werden, ohne dass besondere Bearbeitungen notwendig sind, um beispielsweise die Lagerzapfen bei der Galvanisierung von einer Metallisierung auszuschließen.

Als Lichtquelle kann beispielsweise eine Leuchtdiode verwendet werden, die vor der Stirnseite des Lagerzapfens platziert ist. Es kann aber auch eine Lichtleitfaser vor der Stirnseite des Lagerzapfens bzw. der Lagerzapfen enden, die das Licht von einer entfernten Lichtquelle zuführt. Die Lichtquelle kann auch eine Glühlampe oder eine andere Kunstlichtlampe sein. Am besten eignet sich jedoch eine energiesparende Leuchtdiode oder mehrere Leuchtdioden, deren Licht gebündelt eingeleitet wird. Die hierfür verwendbaren Kunststoffe sind ebenfalls Polycarbonatkunststoffe, sogenannte LISA-Kunststoffe.

Es hat sich herausgestellt, dass ein Durchbiegen des Kerns auch vermieden werden kann, wenn ein pigmentierter Kunststoff verwendet wird. Die eingebrachten Farbstoffe versteifen den Kern. Wenn Pigmente in die Umhüllungsschicht eingebracht werden, fördert dies ebenfalls die Festigkeit der Lamelle. Außerdem sind hierdurch besondere optische Gestaltungen möglich.

Hergestellt wird eine Lamelle nach der Erfindung in vorteilhafter Weise im Zwei- oder Drei-K-Verfahren, einem Kunststoffspritzverfahren, bei dem die Teile in einem Werkzeug von einer Kavität in die andere Kavität eingelegt und jeweils umspritzt werden. In einer weiteren Kavität kann auch die Weichkunststoffkomponente aus einem nicht galvanisierbaren Kunststoff auf die Umhüllung aufgebracht werden.

Die Erfindung wird nachfolgend anhand der in den Zeichnungen dargestellten Ausführungsbeispiele ergänzend erläutert.

In den Zeichnungen zeigen:
- FIG 1: eine Lamelle in vereinfachter Darstellung gemäß der Erfindung,
- FIG 2: einen Querschnitt durch die Lamelle nach Fig. 1,
- FIG 3: eine Ausführungsvariante der Lamelle nach Fig. 1,
- FIG 4: einen Querschnitt durch eine Lamelle nach Fig. 3,
- FIG 5: ein weiteres Beispiel einer Lamelle nach der Erfindung in vereinfachter perspektivischer Darstellung, und
- FIG 6: einen Querschnitt durch die Lamelle nach Fig. 5.

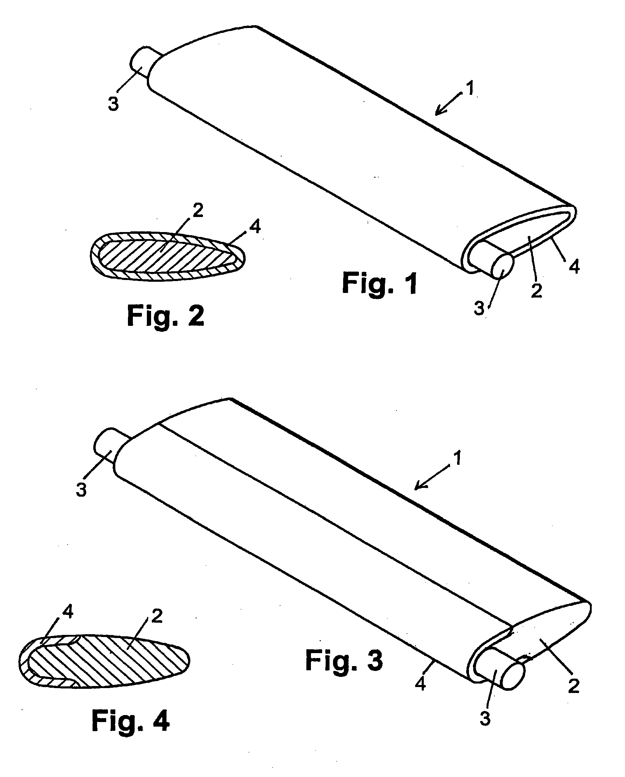

In den Zeichnungen sind drei Ausführungsbeispiele dargestellt. Die Figuren 1 und 2 zeigen eine Lamelle nach der Erfindung, die einen Kern 2 aufweist, der beispielsweise eine bestimmte Oberflächenstruktur aufweist und aus Polycarbonat gefertigt ist. An den Stirnseiten sind seitlich zwei Zapfen 3 angespritzt. Diese Lagerzapfen 3 werden in Lagerausnehmungen im Gehäuse oder Rahmenteil einer Düse eingesetzt. Die Lamelle ist schwenkbar gelagert. Die Mitnehmer, die ebenfalls stirnseitig vorstehen können, um eine Betätigungsstange einrasten zu können, sind der Einfachheit halber nicht dargestellt. Das verwendete Polycarbonat ist für eine galvanische Metallbeschichtung nicht geeignet. Auf die Zapfen an den Stirnseiten wird also in einem galvanischen Bad keine Metallschicht aufgetragen. Der Kunststoff kann durch Fasern verstärkt sein. Um die Mantelfläche herum ist eine Umhüllungsschicht 4 aufgebracht. Diese besteht beispielsweise aus ABS-Kunststoff, also einem Kunststoff, der galvanisierbar ist, so dass in gewünschter Weise auf die Oberfläche eine Metallschicht aufgebracht werden kann. Die vollständige Ummantelung stellt dabei sicher, dass eine Durchbiegung durch Kunststoffschichtenspannungen ausgeschlossen ist. Die Lamelle kann, so wie sie gefertigt ist, verwendet werden, ohne befürchten zu müssen, dass in Folge des Bi-Metall-Effektes bei einseitiger Belegung mit der ABS-Schicht ein Verziehen gegeben ist.

Figuren 3 und 4 zeigen ein weiteres Ausführungsbeispiel, aus dem ersichtlich ist, dass die vordere Partie der Lamelle 1 mit einer Umhüllungsschicht 4 umgeben ist, die aus ABS-Kunststoff besteht, während der Kern 2 den hinteren Teil vollständig bildet und beispielsweise aus glasfaserverstärktem Polycarbonat besteht. Auch hier ist durch die konstruktive Anordnung gewährleistet, dass sich die Lamelle nicht verziehen kann.

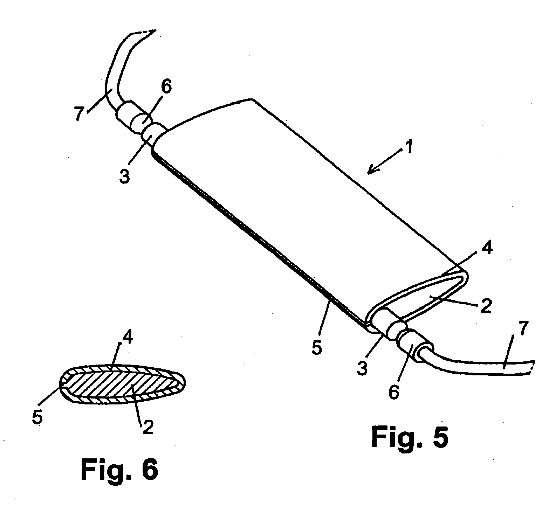

In den Figuren 5 und 6 ist ein Ausführungsbeispiel dargestellt, aus dem die Lamelle 1 aus einem Kern 2 besteht, der aus einem lichtleitenden Material gefertigt ist. Dies kann ein lichtleitendes Polycarbonat sein, bei dem die Oberfläche eine Totalreflexion bietet. Das von den eingezeichneten Leuchtdioden 6 über die Stirnflächen der Lagerzapfen 3 eingespeiste Licht wird im Kern 2 gesammelt. Dieses Licht tritt aus dem Spalt 5 aus, der vorderseitig angeformt ist, wobei der Spalt 5 durch die Umspritzung mit der Umhüllung 4 hergestellt wird. Die Umhüllung 4 kann aus einer Weichkunststoffkomponente bestehen oder auch aus einer Hartkunststoffkomponente. Die Oberfläche kann galvanisiert oder nicht galvanisiert werden bzw. es kann eine Oberflächenstruktur aufgalvanisiert werden. Die Stromversorgung der Leuchtdioden 6 erfolgt über die Stromleitungen 7.

Im Ausführungsbeispiel sind beidseitig Leuchtdioden vorgesehen, diese können auch einseitig vorgesehen sein. Durch die Umspritzung des Kerns mit der Umhüllung 4 ist eine Totalreflexion des Lichtes an den Oberflächen gegeben, so dass deutlich sichtbar vorne das Licht aus dem Spalt 5 hervortritt. Anstelle der eingezeichneten Leuchtdiode kann aber auch die Lichtzufuhr über einen Lichtleiter erfolgen und die Lichtquelle weiter entfernt angebracht sein. Dies hängt von der jeweiligen Ausgestaltung der Düse ab.

### Bezugszeichenliste

- 1: Lamelle
- 2: Kern
- 3: Lagerzapfen
- 4: Umhüllungsschicht
- 5: Spalt
- 6: Leuchtdiode
- 7: Stromleitung

## Patentansprüche

1. Lamelle, geeignet für die verschwenkbare Lagerung in einer Lamellenanordnung in einem Gehäuse einer Luftdüse mit einer vorderen Luftaustrittsöffnung und einem rückseitigen oder seitlichen Anschluss an einem Luftzuführungsschacht, welche Lamelle (1) aus den schmalen Seitenflächen vorstehende, eine Schwenkachse bildende Lagerzapfen (3) aufweist und ein Verbundteil ist, das aus Kunststoff besteht, wobei die Lamelle (1) einen Kern (2) aus einem nicht galvanisierbaren Kunststoff aufweist, an dem die Lagerzapfen (3) aus gleichem Material angeformt sind, und auf dem Kern (2) mindestens auf einem sichtbaren Teil der Lamelle (1) eine Umhüllungsschicht aus einem galvanisierbaren Kunststoff aufgebracht ist, **dadurch gekennzeichnet, dass** die Umhüllungsschicht (4) beidseitig aufgebracht ist und entweder partiell an jenen Stellen, die nicht galvanisiert werden sollen, mit einer nicht galvanisierbaren Weichkunststoffschicht versehen ist oder dass anstelle eines Teils der Umhüllungsschicht (4) aus einem galvanisierbaren Kunststoff partiell auf dem Kern (2) eine nicht galvanisierbare Weichkunststoffschicht aufgebracht ist.

2. Lamelle nach Anspruch 1, **dadurch gekennzeichnet, dass** der Kern (2) aus einem lichtleitenden Kunststoff besteht und das über mindestens einen Lagerzapfen (3) oder mindestens über eine seitliche Stirnfläche die Lichteinleitung erfolgt.

3. Lamelle nach Anspruch 2, **dadurch gekennzeichnet, dass** der Kern (2) mindestens stirnseitig nicht von einer Umhüllungsschicht aus galvanisierbaren Kunststoff oder von einer Weichkunststoffschicht umgeben ist.

4. Lamelle nach Anspruch 1, **dadurch gekennzeichnet, dass** der Kern (2) und/oder die Umhüllungsschicht (4) aus pigmentierten Kunststoff besteht.

5. Lamelle nach Anspruch 2, **dadurch gekennzeichnet, dass** über die Lagerzapfen (3) oder seitlichen Stirnflächen die Lichteinleitung erfolgt.

6. Lamelle nach Anspruch 1, **dadurch gekennzeichnet, dass** zusätzlich ein metallisches Einlegeteil mit dem Kern (2) verbunden oder in den Kern (2) eingespritzt ist.

7. Lamelle nach Anspruch 1, **dadurch gekennzeichnet, dass** der Kern (2) gerippt oder geprägt ist oder eine Rippen- oder Prägestruktur oder Löcher aufweist.

8. Verfahren zur Herstellung einer Lamelle nach einem der vorhergehenden Ansprüche, **dadurch gekennzeichnet, dass** die Lamelle im 2- oder 3-Komponentenspritzgussverfahren hergestellt ist und in einer ersten Kavität des Werkzeugs der Kern eingespritzt ist und einer zweiten Kavität die Umhüllungsschicht aus galvanisierbaren Kunststoff aufgebracht ist und das in einer weiteren Kavität die Weichkunststoffkomponente aus nicht galvanisierbaren Kunststoff auf die Umhüllung aus galvanisierbaren Kunststoff aufgebracht ist, wobei die zu galvanisierenden Flächen freigehalten sind.

## Claims

1. Blade suitable for pivotable mounting in a blade arrangement in a housing of an air nozzle with a front air outlet opening and a rear or lateral connection to an air feed shaft, which blade (1) has bearing pins (3), which project from the narrow side surfaces and which define a pivot axis, and a connecting part, which consists of plastics material, wherein the blade (1) has a core (2) of non-plateable plastics material at which the bearing pins (3) are integrally formed from the same material, and an encasing layer of a plateable plastics material is applied to the core (2) at least on a visible part of the blade (1), **characterised in that** the encasing layer (4) is applied on both sides and is either provided partially with a non-plateable soft plastics material layer at those places which are not to be plated or that instead of a part of the casing layer (4) of a plateable plastics material a non-plateable soft plastics material is applied partially to the core (2).

2. Blade according to claim 1, **characterised in that** the core (2) consists of an optically conductive plastics material and the light entry takes place by way of at least one bearing pin (3) or at least by way of a lateral end surface.

3. Blade according to claim 2, **characterised in that** the core (2) at least at the end is not surrounded by an encasing layer of plateable plastics material or by a soft plastics material layer.

4. Blade according to claim 1, **characterised in that** the core (2) and/or the encasing layer (4) consist or consists of pigmented plastics material.

5. Blade according to claim 2, **characterised in that** the light entry takes place by way of the bearing pins (3) or lateral end surfaces.

6. Blade according to claim 1, **characterised in that** in addition a metallic insert member is connected with the core (2) or injection moulded in the core (2).

7. Blade according to claim 1, **characterised in that** the core (2) is ribbed or embossed or has a ribbed or embossed structure or holes.

8. Method of producing a blade according to any one of the preceding claims, **characterised in that** the blade is produced in a two-component or three-component injection-moulding method and the core is injection-moulded in a first cavity of the tool and the encasing layer of plateable plastics material is applied in a second cavity and that the soft plastics material component of non-plateable plastics material is applied to the casing of plateable plastics material in a further cavity, wherein the areas to be plated are kept free.

## Revendications

1. Lamelle, adaptée pour un montage pivotant dans un agencement de lamelles dans le carter d'une buse à air présentant une sortie d'air avant et un raccord arrière ou latéral à une trémie d'amenée d'air, ladite lamelle (1) comportant un tourillon (3) formant un axe de pivotement en saillie sur les surfaces des largeurs, et étant une pièce composite en matière plastique, ladite lamelle (1) ayant un noyau (2) en matière plastique non galvanisable, contre laquelle sont formés les tourillons (3) composés du même matériau, et une couche de revêtement en matière plastique galvanisable étant appliquée sur le noyau (2), au moins sur une partie visible de la lamelle (1), **caractérisée en ce que** la couche de revêtement (4) est appliquée sur les deux côtés de manière partielle aux emplacements n'ayant pas à être galvanisés et est pourvue d'une couche de matière plastique tendre non galvanisable, ou bien **en ce qu'**une couche de matière plastique tendre non galvanisable est appliquée de manière partielle sur le noyau (2) au lieu d'une partie de la couche de revêtement (4) en matière plastique galvanisable.

2. Lamelle selon la revendication 1, **caractérisée en ce que** le noyau (2) est en matière plastique conductrice lumineuse et **en ce que** la pénétration de lumière a lieu par au moins un tourillon (3) ou au moins une surface frontale latérale.

3. Lamelle selon la revendication 2, **caractérisée en ce qu'**au moins frontalement, le noyau (2) n'est pas entourée par une couche de revêtement en matière plastique galvanisable ou par une couche de matière plastique tendre.

4. Lamelle selon la revendication 1, **caractérisée en ce que** le noyau (2) et/ou la couche de revêtement (4) sont en matière plastique pigmentée.

5. Lamelle selon la revendication 2, **caractérisée en ce que** la pénétration de lumière a lieu par les tourillons (3) ou les surfaces frontales latérales.

6. Lamelle selon la revendication 1, **caractérisée en ce qu'**en outre une pièce d'insertion métallique est reliée au noyau (2) ou moulée par injection dans le noyau (2).

7. Lamelle selon la revendication 1, **caractérisée en ce que** le noyau (2) est cranté ou gaufré, ou présente une structure à nervures, gaufrures ou perforations.

8. Procédé de fabrication d'une lamelle selon l'une des revendications précédentes, **caractérisé en ce que** ladite lamelle est fabriquée avec un procédé de moulage par injection à 2 ou 3 composants, le noyau est moulée par injection dans une première cavité de l'outil et la couche de revêtement en matière plastique galvanisable est appliquée dans une deuxième cavité, et **en ce que** le composant en matière plastique tendre non galvanisable est appliqué dans une autre cavité sur l'enrobage en matière plastique galvanisable, les surfaces à galvaniser restant dégagées.
